# EUROPEAN PATENT APPLICATION

(11) **EP 4 563 987 A1**
(43) Date of publication of application: **04.06.2025**
(21) Application number: 23846527.2
(22) Date of filing: 25.07.2023
(51) Int. Cl.: G01N 23/041, G01N 23/04

(54) **IMAGE MANAGEMENT SYSTEM, IMAGE MANAGEMENT DEVICE, IMAGE MANAGEMENT METHOD, AND IMAGE MANAGEMENT PROGRAM**

(30) Priority: 29.07.2022 JP 2022121140
(71) Applicant: KONICA MINOLTA, INC., Tokyo 100-7015 (JP)
(72) Inventor: OTA Ikuma, Tokyo 100-7015 (JP)
(74) Representative: MFG Patentanwälte Meyer-Wildhagen Meggle-Freund Gerhard PartG mbB
(86) International application number: PCT/JP2023/027243
(87) International publication number: WO 2024/024797

(57) **Abstract**

Provided are an image management system, an image management device, an image management method, and an image management program with which it is possible to more suitably associate a parent sample and evaluation results of a child sample. This image management system (control device 20) includes: a first storage unit (storage unit 23) that stores a first image of a first sample related to quality information; a second storage unit (storage unit 23) that stores evaluation results of a second sample extracted from the first sample; and a third storage unit (storage unit 23) that stores information about an extraction location of the first sample or the second sample, and the feature amount at a location selected from the first image. The first image, the evaluation results of the second sample, the information about the extraction location, and the feature amount are associated with each other.

## Description

### Technical Field

The present invention relates to an image management system, an image management device, an image management method, and an image management program.

### Background Art

In composite materials that have attracted attention in recent years, not only the material itself but also the fine internal structure of the material has a great influence on the mechanical properties of the member. For example, CFRP (Carbon Fiber Reinforced Plastics) has a three dimensional structure with weaving and orientation of carbon fibers, and the mechanical strength is greatly affected by the fiber orientation and the fiber density.

In the initial stage of resin development, a large number of test samples (parent samples) which have simple shapes such as dumbbell test pieces and flat plates and which are different in material and molding conditions, are prepared, and in order to evaluate the internal state of a molded article, the test samples are generally cut out into a size which can be analyzed. Next, using the cut-out samples (child samples), the states of the surface of the test pieces and the inside of the test pieces are confirmed by measurement of the fiber amount and fiber length after ash content measurement, µCT, an optical microscope, a ultrasonic diagnostic apparatus, and SEM. In addition, as the evaluation of material properties, a tensile strength test, a Charpy impact test, a bending test, an electromagnetic wave shielding performance test, and a reliability test by repeated deformation, chemical application, or the like are performed.

However, there is a problem that it is difficult to manage which sample is cut out from which position in which direction in an associated manner. In particular, the state of fibers, which is the internal state of the test sample, and defects such as voids and cracks are difficult to determine from the appearance and difficult to manage.

In relation to this, Patent Literature 1 has disclosed a configuration in which after an image of an entire sample is captured as an image of a parent sample (parent image), a specific part of the sample is enlarged and captured and saved as a child image, and the parent image and the child image are saved in association with each other and displayed.

### Citation list

### Patent Literature

Patent Document 1: Japanese Patent No. 3366352

### SUMMARY OF INVENTION

### Technical Problem

However, in Patent Document 1, although it is possible to know from which position of the parent sample the parent sample is cut out, information as to why the parent sample is cut out at that position is not associated. Therefore, it is difficult to manage the parent sample and the evaluation result of the child sample in a suitably associated manner.

An object of the present invention is to manage a parent sample and an evaluation result of a child sample in a more suitable manner.

### Solution to Problem

In order to solve the above problem, an image management system according to the present invention includes:
a first storage section that stores a first image of a first sample related to quality information;
a second storage section that stores an evaluation result of a second sample cut out from the first sample; and
a third storage section that stores information on a cut-out position of the first sample or the second sample and a feature amount at a position selected from the first image,
wherein the first image, the evaluation result of the second sample, the information on the cut-out position, and the feature amount are associated with each other.

An image management device according to the present invention includes:
a first storage section that stores a first image of a first sample related to quality information;
a second storage section that stores an evaluation result of a second sample cut out from the first sample; and
a third storage section that stores information on a cut-out position of the first sample or the second sample and a feature amount at a position selected from the first image,
wherein the first image, the evaluation result of the second sample, the information on the cut-out position, and the feature amount are associated with each other.

An image management method according to the present invention includes:
a step of storing a first image of a first sample related to quality information;
a step of storing an evaluation result of a second sample cut out from the first sample;
a step of storing information on a cut-out position of the first sample or the second sample and a feature amount at a position selected from the first image; and
a step of associating the first image, the evaluation result of the second sample, the information on the cut-out position, and the feature amount with each other.

An image management program according to the present invention causes a computer of an image management device to function as a controller that:
stores a first image of a first sample related to quality information;
stores an evaluation result of a second sample cut out from the first sample;
stores information on a cut-out position of the first sample or the second sample and a feature amount at a position selected from the first image; and
associates the first image, the evaluation result of the second sample, the information on the cut-out position, and the feature amount with each other.

### Advantageous Effects of Invention

According to the present invention, the evaluation results of the parent sample and the child sample can be more suitably managed in association with each other.

### Brief Description of Drawings

[Fig. 1] This is a schematic diagram showing an overall view of an X-ray Talbot imaging device and a subject housing section.
[Fig. 2] This is a block diagram showing a schematic configuration of an X-ray imaging system.
[Fig. 3] This is a block diagram showing a schematic configuration of a storage.
[Fig. 4] This is an example of a user information database 23g.
[Fig. 5] This is a flowchart showing association processing.
[Fig. 6] This is a display example of an image analysis result display screen.
[Fig. 7] This is a display example of a region selection screen.
[Fig. 8] This is a display example of a cut-out region registration screen.
[Fig. 9] This is a display example of a cut-out region registration screen.
[Fig. 10] This is a display example of an evaluation result registration screen.
[Fig. 11] This is a display example of an evaluation result display screen.
[Fig. 12] This is a display example of an analysis result display screen.
[Fig. 13] This is a flowchart showing information association processing relating to selection of a region.
[Fig. 14] This is a flowchart showing cut-out position automatic detection processing.
[Fig. 15] This is an example showing correspondences between parent sample images and child sample images.
[Fig. 16] This is an example of pattern matching between a parent sample image and a child sample image.

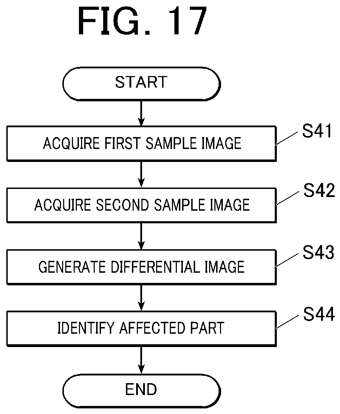

[Fig. 17] This is a flowchart showing cut-out influence specifying processing;
[Fig. 18] This is an example of difference comparison between a parent sample image and a child sample image.
[Fig. 19] This is a flowchart showing similar sample information display processing.
[Fig. 20] This is an example of similarity calculation.
[Fig. 21] This is a display example of a similar image display screen.

### Description of Embodiments

In the following, embodiments of the present invention will be described with reference to the drawings. It should be noted that the following embodiments are provided with various limitations that are technically preferable for carrying out the present invention, but the technical scope of the present invention is not limited to the following embodiments and illustrated examples.

### (First Embodiment)

In the present embodiment, an X-ray imaging system that stores a first image which is obtained by imaging a first sample (parent sample, subject H) by the X-ray Talbot imaging device 1 and on which predetermined quality information can be recognized, an evaluation result of a second sample (child sample) cut out from the first sample, information of a cut-out position of the second sample in the first sample, and a feature amount at a position corresponding to the cut-out position of the first image and that associates the first image, the evaluation result of the second sample, the information of the cut-out position, and the feature amount will be described.

Various kinds of processing including the association processing are performed by the control device 20 connected to the X-ray Talbot imaging device 1.

### [Regarding Subject]

The subject H in the present embodiment is a composite material (also referred to as a composite material), and is used as a constituent member of various products or the like including, for example, electric, electronic, and household electric appliances, a parabolic antenna, a bathtub, a floor material, a roof material, and the like in addition to space and aircraft, an automobile, a ship, and a hanging rod.

As such composite materials, for example, fiber-reinforced plastics (FRP) typified by carbon-fiber-reinforced plastics (CFRP) using carbon fibers or glass fibers as reinforcing fibers, carbon fiber-reinforced thermoplastics (CFRTP), and glass-fiber-reinforced plastics (GFRP), ceramic matrix composites (CMC) using ceramic fibers as a reinforcing material, and the like are known. In addition, in a broad sense, for example, a composite material made of a plurality of kinds of woods such as plywood may be included. In addition, for example, composite materials that do not include fibers, such as metal matrix composites (MMC) concrete and reinforced concrete, may also be included.

The resin used for the composite material is, for example, general-purpose plastic, engineering plastic, or super engineering plastic, but is not limited thereto. The resin is used in a resin composite material to which a filler having a micro-size or nano-size structure is added in order to add predetermined characteristics such as strength, and is often used as a plastic molded product. The filler includes an organic material, an inorganic material, a magnetic material, and a metal material. For example, in a case where strength or rigidity is required for a plastic molded product, a composite material may be used in which PPS, POM, PA, PC, PP, or the like is used as the resin, and aramid fiber, talc, cellulose fiber, or the like is used as the filler. In addition, in a case where the plastic molded product is a plastic magnet, a composite material of nylon as the resin and strontium ferrite, samarium cobalt, or the like as the filler is used in some cases.

### [About X-ray Talbot imaging apparatus]

In the present embodiment, as the X-ray Talbot imaging device 1, a device using a Talbot-Lau interferometer including a source grating (also referred to as a multi-grating, a multi-slit, a G0 grating, or the like) 12 is adopted. It is also possible to adopt an X-ray Talbot imaging device using a Talbot interferometer which does not include the source grating 12 and includes only the first grating (also referred to as a G1 grating) 14 and the second grating (also referred to as a G2 grating) 15.

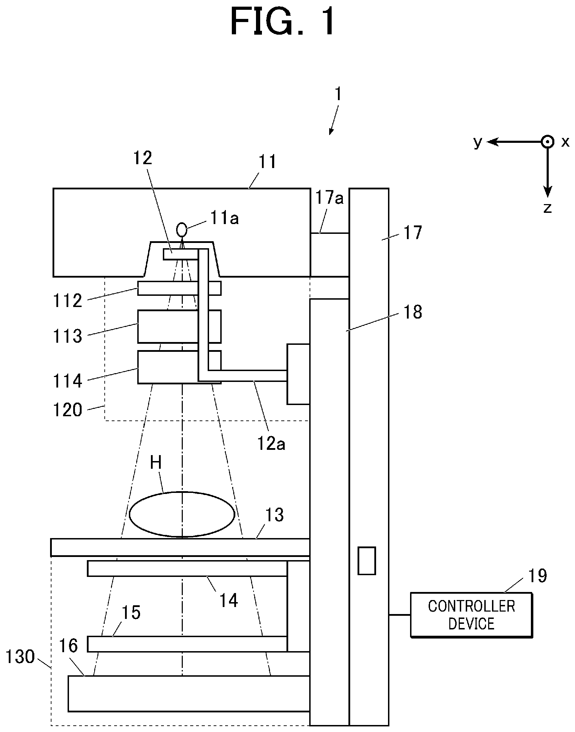

Fig. 1 is a schematic diagram illustrating an overall view of an X-ray Talbot imaging device 1.

The X-ray Talbot imaging device 1 according to the present embodiment includes an X-ray generator 11, the above-described source grating 12, a subject table 13, the above-described first grating 14, the above-described second grating 15, an X-ray detector 16, a support pillar 17, and a base 18.

According to such an X-ray Talbot imaging device 1, at least three types of images (two dimensional images) can be reconstructed (referred to as reconstructed images) by imaging a moire image Mo of the subject H at a predetermined position with respect to the subject table 13 by a method based on the principle of the fringe scanning method or analyzing the moire image Mo using the Fourier transform method. That is, the three types of images are an absorption image (the same as a normal X-ray absorption image) obtained by imaging an average component of moire fringes in the moire image Mo, a differential phase image obtained by imaging phase information of the moire fringes, and a small-angle scattering image obtained by imaging visibility (definition) of the moire fringes. It is also possible to generate more types of images by, for example, re-synthesizing these three types of reconstructed images.

The fringe scanning method is a method in which one of a plurality of gratings is moved in the slit period direction by 1/M (M is a positive integer, M > 2 for an absorption image, and M > 3 for a differential phase image and a small-angle scattering image) of the slit period of the grating, and moire images Mo are captured M times for reconstruction to obtain a high-definition reconstructed image.

In addition, the Fourier transform method is a method in which one moire image Mo is captured by an X-ray Talbot imaging device in a state where a subject exists, and in image processing, the moire image Mo is subjected to Fourier transform or the like to reconstruct and generate an image such as a differential phase image.

The configuration of other parts in the X-ray Talbot imaging device 1 according to the present embodiment will be described. In the present embodiment, the X-ray Talbot imaging device 1 is of a so-called vertical type in which the X-ray generator 11, the source grating 12, the object table 13, the first grating 14, the second grating 15, and the X-ray detector 16 are arranged in this order in the z direction, the direction of gravity. That is, in the present embodiment, the z direction is an irradiation direction of X-rays from the X-ray generator 11.

The X-ray generator 11 includes, as an X-ray source 11a, for example, a Coolidge X-ray source, a rotating-anode X-ray source, or the like which is widely and generally used in medical sites. It is also possible to use other X-ray sources. The X-ray generator 11 of the present embodiment irradiates X-rays in a cone shaped beam from a focal point. That is, as shown in Fig. 1, the X-rays are radiated so as to spread out as the distance from the X-ray generator 11 increases with the X-ray radiation axis Ca, which coincides with the z direction, as the central axis (i.e., the X-ray radiation range).

In the present embodiment, the source grating 12 is provided below the X-ray generator 11. At that time, in order that vibration of the X-ray generator 11 generated due to rotation of the positive electrode of the X-ray generator 11a or the like is not transmitted to the source grating 12, in the present embodiment, the source grating 12 is not attached to the X-ray generating apparatus 11 but is attached to a fixing member 12a attached to the base 18 on the support column 17.

In the present embodiment, a buffer member 17a is provided between the X-ray generator 11 and the support pillar 17 in order to prevent the vibration of the X-ray generator 11 from propagating to other portions of the X-ray Talbot imaging device 1 such as the support pillar 17 (or in order to reduce propagation of the vibration).

In the present embodiment, in addition to the source grating 12, a filter (also referred to as an additional filter) 112 for changing the radiation quality of the X-rays having passed through the source grating 12, an irradiation field aperture 113 for narrowing down the irradiation field of the X-rays to be emitted, an irradiation field lamp 114 for performing alignment by emitting visible light, instead of the X-rays, to the object before the X-rays are emitted, and the like are attached to the fixing member 12a.

The source grating 12, the filter 112, and the irradiation field aperture 113 are not necessarily provided in this order. Furthermore, in the present embodiment, a first cover unit 120 is arranged around the source grating 12 and the like to protect them.

In addition, the controller device 19 (see Fig. 1) is configured by a computer in which a central processing unit (CPU), a read only memory (ROM), a random access memory (RAM), an input/output interface, and the like (not illustrated) are connected to a bus in the present embodiment. The controller device 19 may be configured as a dedicated control device rather than a general-purpose computer in the present embodiment. Furthermore, although not illustrated, the controller device 19 is provided with appropriate means and devices such as input means and output means including an operation part, storage means, and communication means.

The output means includes a display part (not shown) that displays a generated reconstructed image and information necessary for performing various operations of the X-ray Talbot imaging device 1.

The controller device 19 performs overall control of the X-ray Talbot imaging device 1. That is, for example, the controller device 19 is connected to the X-ray generator 11, and can set a tube voltage, a tube current, an irradiation time, and the like in the X-ray source 11a. Further, for example, the controller device 19 may be configured to relay transmission and reception of signals and data between the X-ray detector 16 and the external image processing apparatus 2 or the like.

That is, the controller device 19 according to the present embodiment functions as a controller that causes a series of imaging for acquiring a plurality of moire images Mo (one moire image for the Fourier transform method) necessary for generating a reconstructed image of the subject H to be performed.

### [About Controller]

In the present embodiment, a general-purpose computer device (control PC) is adopted as the control device 20 that executes various types of processing. However, the present invention is not limited thereto, and some of the functions of the control device 20 may be provided on a network so that each process can be executed by exchanging data through communication.

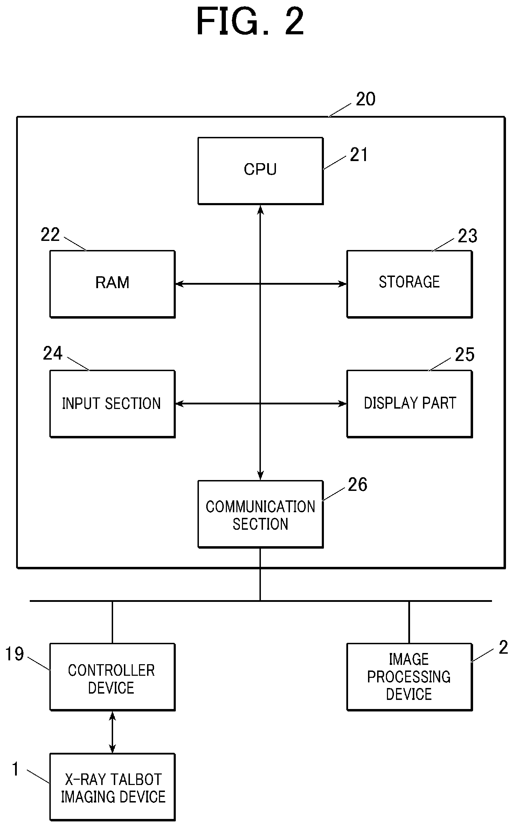

As shown in Fig. 2, the control device 20 includes a central processing unit (CPU) 21, a random access memory (RAM) 22, a storage 23, an input section 24, a display part 25, a communication section 26, and the like.

The CPU 21 reads various programs such as a system program and a processing program stored in the storage 23, develops the programs in the RAM 22, and executes various kinds of processing including association processing described below in accordance with the developed programs. That is, the CPU 21 functions as a controller of the entire X-ray imaging system.

The CPU 21 stores a first image (parent image) of a first sample (parent sample) in a first storage section described later, stores an evaluation result of a second sample (child sample) cut out from the first sample in a second storage section described later, stores information on a cut-out position of the second sample in the first sample and a feature amount at a position corresponding to the cut-out position of the first image in a third storage section described later, and associates the evaluation results of the first image and the second sample with each other by the information on the cut-out position and the feature amount.

Furthermore, the CPU 21 also functions as an acquirer that acquires proficiency information on a user who has input information on selection of a region, which is described later.

The RAM 22 functions as a work area that temporarily stores various programs that can be executed by the CPU 21 read from the storage 23, input or output data, parameters, and the like in various kinds of processing that are executed and controlled by the CPU 21.

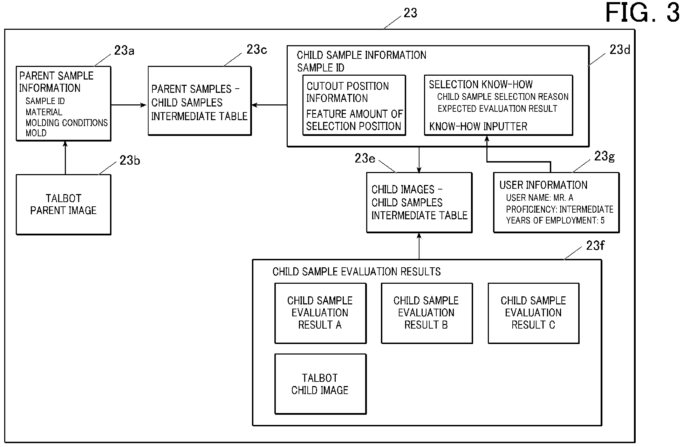

The storage 23 is configured by a hard disk drive (HDD), a semiconductor nonvolatile memory, or the like. The storage 23 stores, in addition to the various programs described above, a database shown in Fig. 3 for executing various kinds of processing such as processing described later.

The storage 23 functions as a first storage section that stores first images (parent images) which are obtained by imaging first samples (parent samples) and from which predetermined quality information can be recognized.

The storage 23 functions as a second storage section that stores evaluation results of second samples (child samples) cut out from the first samples.

In addition, the storage 23 functions as a third storage section that stores the information of the cut-out positions of the second samples in the first samples and the feature amounts at the positions corresponding to the cut-out positions of the first images.

Here, a database (DB) stored in the storage 23 will be specifically described with reference to Fig. 3.

A parent sample information database 23a is a database that stores information on a subject H (parent sample). For example, the parent sample information database 23a stores information on a sample ID, a material, molding conditions, a mold, and the like. The material information includes the resin serving as the base material, the name of the filler for the composite material, the content of the filler, and furthermore, as kneading conditions of the resin serving as the base material and the filler, the screw shape of the kneader, the back pressure, the resin temperature, and the like. In the case of injection molding, the molding conditions include information on temperature and pressure at the time of molding and molding time, such as resin temperature in a screw, back pressure, injection speed, mold temperature, and cooling temperature. The information on the mold includes a design drawing, a gate position and a gate diameter, a runner shape, a shape of the molded product (a flat plate shape or a dumbbell shape), a size of the molded product (information on width, height, and thickness), and the like.

The parent image database 23b is a database that stores image data of the subject H. For example, the parent image database 23b stores Talbot images (parent images) captured using the X-ray Talbot imaging device 1.

The parent sample-child sample intermediate table 23c is a database that associates a parent sample information database 23a with a child sample information database 23d using sample IDs.

The child sample information database 23d is a database that stores information on child samples cut out from subjects H. For example, the child sample information database 23d stores a sample ID, cutout position information, a feature amount of a selection position (region, range), selection know-how (child sample selection reason, predicted evaluation result, know-how inputter, and the like), and the like. Here, the feature amount of the selected position is a value extracted from the parent image and reflecting the quality information, and is, for example, an average value, a deviation, or the like of pixels in the selected region. As another example, an area of a region equal to or more than a certain threshold value after performing binarization processing on the selected region of the parent image is set as the feature amount of the region having a large fiber amount, or a value obtained by extracting a contour of a region equal to or more than a certain threshold value by combining binarization processing and contour extraction and counting the number of regions surrounded by the contour is set as the feature amount as the number of regions of fiber aggregation. Information in the database regarding the child sample selection reason (the reason why the second sample is cut out) is referred to as reason information. Information in the database on selection know-how (child sample selection reason, predicted evaluation result, know-how inputter, and the like) is defined as information on selection of a region.

The child image-child sample intermediate table 23e is a database that associates the child sample information database 23d with the child sample evaluation result database 23f.

The child sample evaluation result database 23f is a database that stores measurement results of child samples. For example, the child sample evaluation result database 23f stores child sample evaluation results and Talbot images (child images) captured using the X-ray Talbot imaging device 1. The child image is not limited to the Talbot image, but may be an optical image, an ultrasonic diagnostic image, a scanning electron microscope (SEM) image, a µCT image, or the like.

Furthermore, the evaluation of the material properties of the child sample may be evaluation by a tensile strength test, a Charpy impact test, a bending test, or a reliability test by repeated deformation, chemical application, or the like.

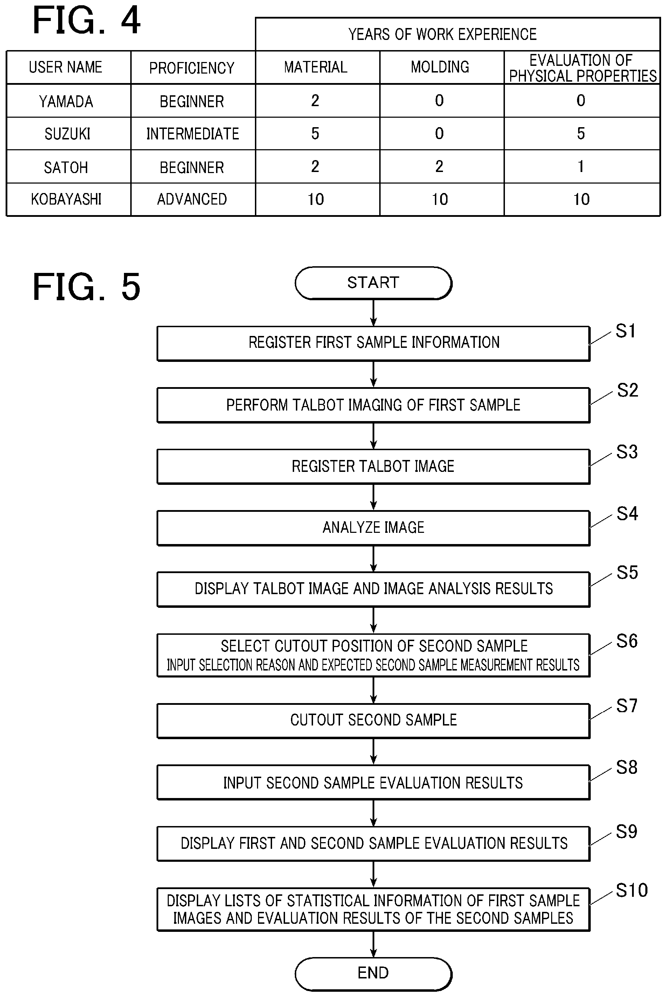

The user information database 23g is a database that stores information related to a user who uses the control device 20. For example, as shown in Fig. 4, the user information database 23g stores a user name, a proficiency level (user proficiency level information), the number of years of work, and the like. The proficiency information of the user indicates information corresponding to business experience of the user. For example, as shown in Fig. 4, the number of years of experience in the area of materials, molding, and physical property evaluation may be input so that the proficiency information on the material experience for five years or more may be considered as experienced users. Furthermore, category classifications such as novice, intermediate level, advanced level, beginner, and veteran may be explicitly prepared and used for classification of each user.

As described above, the first image (parent image), the evaluation result of the second sample (child sample), the information of the cut-out position of the second sample in the first sample (parent sample), and the feature amount at the position (selection position) corresponding to the cut-out position of the first image are associated with each other.

The various databases described above are not only stored in the storage 23 of the control device 20, but may also be provided on a network.

Here, the quality information will be described.

The quality information relates to the quality of the subject H, and includes fiber orientation, voids, cracks, foreign matters, density unevenness, fiber unevenness, and the like. Specifically, the quality information includes variations in density of resin and fiber, presence or absence of a foreign substance such as metal inside resin, presence or absence of a void between resin and fiber or a void inside resin, presence or absence of a fiber bundle formed of a plurality of fibers, fiber orientation direction/degree, variations in density (unevenness in fiber amount) of fiber or filler (e.g., talc), weld (generation position, shape), resin flow direction (flow direction near gate, at gate end, etc), microcracks generated by tensile test, heat cycle test, chemical attack, etc. (cracks having a width on the order of µm, etc.), micro air bubbles in the adhesive layer (air bubbles having a size on the order of µm are detected), and the like.

The orientation information is the orientation and density of fibers included in the subject H. The orientation information also includes voids and cracks, for example, "a portion having low orientation and a small fiber amount is a void".

That is, the quality information includes the orientation information.

The input section 24 includes a keyboard having cursor keys, number input keys, and various function keys, and a pointing device such as a mouse. The input section 24 outputs, to the CPU 21, a press signal of a key pressed on the keyboard or an operation signal by the mouse as an input signal. The CPU 21 can execute various kinds of processing based on the operation signals from the input section 24.

The input section 24 functions as an information input receiver for inputting information regarding the selection of the region described above.

The display part 25 includes a monitor such as a cathode ray tube (CRT) or a liquid crystal display (LCD), for example. The display part 25 displays various screens according to instructions of display signals input from the CPU 21. In addition, in a case where a touch screen is adopted as the display part 25, the display 25 also has a function as the input section 24.

The communication section 26 includes a communication interface and communicates with an external device on a network.

The external devices on the network include the controller 19 of the X-ray Talbot imaging device 1, and the controller device 19 and the control device 20 are communicably connected to each other via the communication section 26.

The control device 20 (CPU 21) performs various types of processing, such as association processing, using the various databases described above, and the processing is executed based on a program stored in the storage 23.

### [Regarding Association Processing]

The association processing executed in the control device 20 will be described. The association processing is a process of associating the first image (parent image), the evaluation result of the second sample (child sample), the information of the cut-out position of the second sample in the first sample, and the feature amount at the position corresponding to the cut-out position of the first image.

First, the CPU 21 registers the information of the first sample (parent sample) input by the user via the input section 24 in the parent sample information database 23a (Step S1).

Next, the CPU 21 controls the controller device 19, controls the X-ray Talbot imaging device 1, performs Talbot imaging of the first sample, and acquires a Talbot image (first image) of the parent sample (Step S2).

Next, the CPU 21 registers the Talbot image of the parent sample in the parent image database 23b (Step S3). When a Talbot image is registered in the parent image database 23b, the parent sample information database 23a and the parent image database 23b are associated with each other.

Next, the CPU 21 analyzes the Talbot image (Step S4).

Specifically, as shown in a display region D described later, the Talbot image is color-coded in accordance with the magnitude of the signal value of each pixel of the Talbot image. In order to facilitate the determination, all the pixels equal to or less than the threshold value are colored in white.

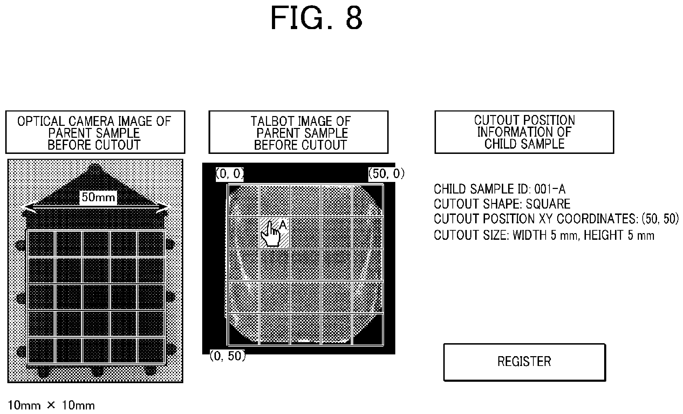

Furthermore, it is preferable that a region to be grouped is set according to a sample shape to be cut out. For example. In a case where the ash content measurement is performed (in a case where a cut-out region registration screen shown in Fig. 8 which will be described later is used), it is preferable that the region is cut out in a 10 mm sized square, and therefore, mosaic processing is performed in which images corresponding to 10 mm sized squares are grouped and a feature amount representing the region is derived. For example, in a case where the Talbot image size is an area of 50 mm × 50 mm, the image is displayed in areas of 5 × 5.

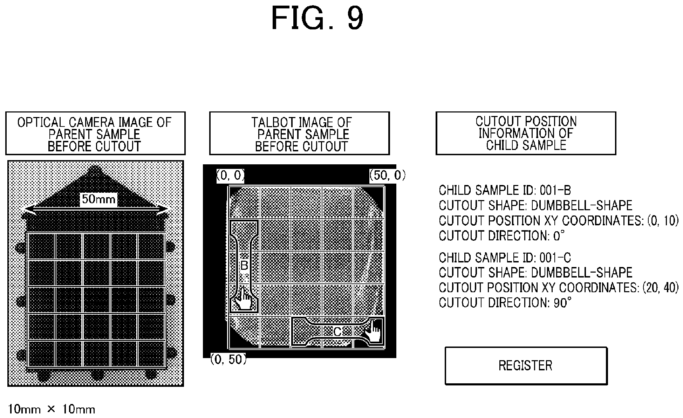

When the sample to be cut out has a dumbbell shape (dumbbell test piece) (when the cut-out region registration screen shown in FIG. 9 described later is used), if the representative width of the dumbbell test piece (for example, the width of the short side) is 8 mm, the regions to be grouped is changed to 8 mm sized squares.

Thus, the user can determine which position in the Talbot image should be focused on, and can explicitly indicate the position to be cut out.

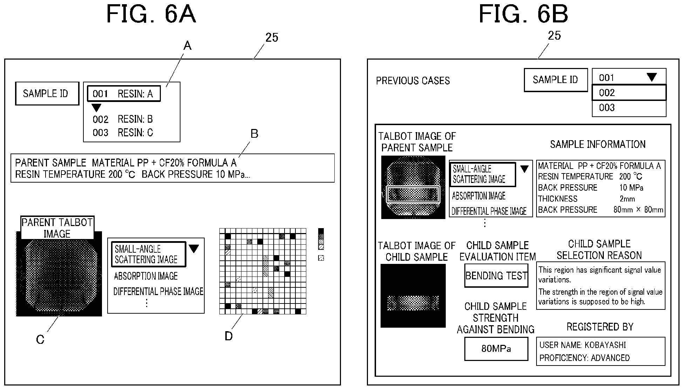

Next, the CPU 21 causes the display part 25 to display the Talbot image and the image analysis result on the image analysis result display screen shown in Fig. 6(a) (Step S5). In other words, the parent sample is evaluated using the Talbot image (first image). Next, the user selects a region, which will be described later, with reference to the image analysis result display screen shown in Fig. 6(a).

Here, the image analysis result display screen illustrated in Fig. 6 (a) will be described.

A display area A is an area for displaying a sample ID to be selected by the user.

A display area B is an area for displaying information of the sample corresponding to the sample ID displayed in the display area A.

A display area C is an area where the Talbot image is displayed.

A display area D is an area for displaying the image analysis result.

Fig. 6(b) is a past evaluation result display screen. The user may refer to the past evaluation result display screen shown in Fig. 6(b) and select a region, which will be described later.

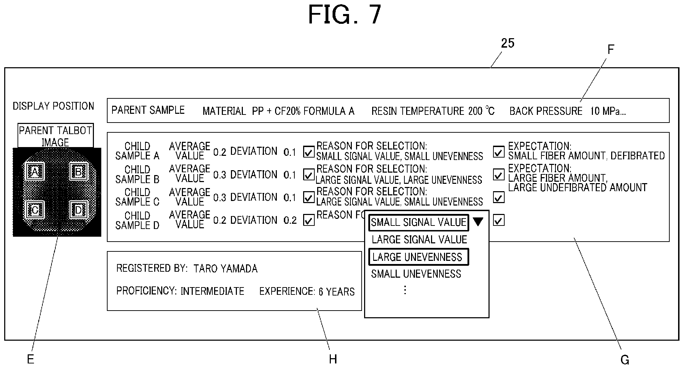

Next, the CPU 21 acquires the cut-out position selection result of the second sample, the selection reason, and the second sample measurement predicted result input by the user via the input section 24 on the region selection screen shown in Fig. 7 (Step S6).

Here, the region selection screen shown in Fig. 7 will be described.

A display area E is an area where the user selects a region (a cut-out region) where a child sample is cut out from a parent sample. Hereinafter, a specific method for registering a cut-out region will be described.

For example, in a case where a parent sample is a 50 mm flat sheet and a child sample of a 10 mm sized square used for ash content measurement is cut out using the cut-out region registration screen shown in Fig. 8, guide lines are displayed at 10 mm intervals on the Talbot image, and cut-out position information can be registered by selecting one of the divided regions and pressing a registration button. In the cut-out region registration screen shown in Fig. 8, the Talbot image may be displayed as it is, or as shown as D in Fig. 6(a), the feature amounts of respective sections according to the size of the sample to be cut out may be displayed distinguishably. Then, the CPU 21 stores the cut-out shape, the upper left XY coordinates of the cut-out position, and the cut-out size as the cut-out position information in the DB (child sample information database 23d) together with the ID of the child sample.

For example, in a case where a parent sample is a flat sheet and a dumbbell-shaped sample is cut out for a tensile test using the cut-out region registration screen shown in Fig. 9 (the short side of the dumbbell test piece is 10 mm), guide lines are displayed at 10 mm intervals on the Talbot image, and the user can specify the cut-out position by moving the cursor over the dumbbell shape to be cut out on the image and pressing the registration button. Then, the CPU 21 stores the dumbbell shape as the cut-out shape, the XY coordinates of the upper left corner of the cut-out position, and the angle information of the cut-out direction in the DB (child sample information database 23d) as the cut-out position information together with the ID of the child sample.

Although a region is cut out here, a region selected without being cut out in Step S7 described later may be further subjected to image processing.

A display area F is an area for displaying information of the parent sample.

A display area G is an area for displaying the feature amount extracted from the image of the cut-out region selected in the display area E, the reason for the selection by the user, and the expected quality. In the example of Fig. 7, the average value and the deviation of the pixels are displayed as the feature amount. The user can also input (or select) know-how such as the reason for selection (signal value, unevenness) and prediction (fiber amount, defibration).

In Fig. 7, information is input via the input section 24 by selection from options prepared in advance. This makes it easier to analyze the correspondence between the options and the proficiency of the know-how inputter described later. For example, an intermediate one tends to select option A, while an advanced one tends to select option B.

A display area H is an area for displaying user information.

When a cut-out region of a child sample is selected in the display area E, the image analysis is performed on the cut-out region by the CPU 21, a feature amount is extracted, and the feature amount is displayed in the display area G.

In addition, when the selection of the cut-out region and the like is completed, the CPU 21 registers information such as the cut-out position information, the feature amount, the selection know-how, and the know-how inputter in the child sample information database 23d. The child sample information database 23d is then associated with the parent sample information database 23c via the parent sample-child sample intermediate table 23a. Furthermore, a user information database 23g is associated as the information of the know-how inputter.

Further, when associating the child sample information database 23d with the parent sample information database 23a, the CPU 21 may control whether or not to associate information on the region selection (selection know-how; child sample selection reason, predicted evaluation result, know-how inputter, and the like) with the parent sample information database 23g based on proficiency information included in the user information database 23a. For example, as shown in Fig. 4, when the proficiency is equal to or higher than intermediate, the information regarding the selection of the region is associated with the parent sample information database 23a, but when the proficiency is that of a beginner, they are not associated. Further, it is also possible to perform control for weighting the associated information in accordance with the proficiency. This processing will be described later as information association processing regarding selection of a region.

Next, using a child sample cut-out device, a cut-out region selected by the user is cut out from the parent sample as a child sample. The CPU 21 controls the controller device 19, controls the X-ray Talbot imaging device 1, and performs imaging or the like of the child sample (Step S7). In the present embodiment, the position B is cut out, Talbot imaging, imaging using an optical microscope, and ash content measurement are performed, and evaluation of the child sample, such as evaluation of the fiber content from the weight change before and after the resin is evaporated or dissolved, and evaluation of the fiber length distribution of the remaining fibers or fillers, is performed. Furthermore, the method of evaluating the child samples is not limited thereto.

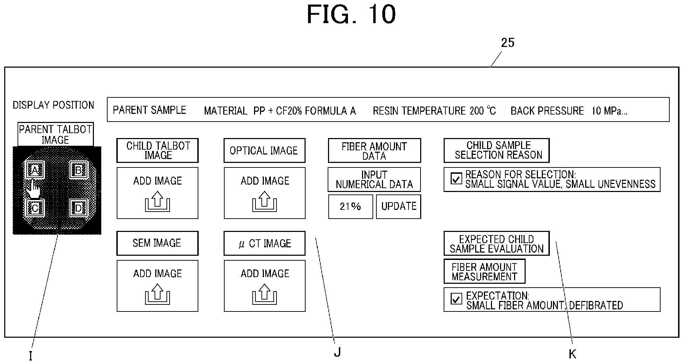

Next, the CPU 21 acquires the image data and the fiber amount data input by the user via the input section 24 on the evaluation result registration screen shown in Fig. 10 (Step S8).

A display area I is a selection area where the user selects a region in which a child sample is cut out from a parent sample.

A display area J is a data (image data and fiber amount data) registration area. In the present embodiment, the parent image is a Talbot image, but the child image to be registered is not limited to a Talbot image, and may be an optical image, a scanning electron microscope (SEM) image, a µCT image, or the like.

A display area K is an area in which the selection reason and the prediction input on the region selection screen are displayed.

When the input is completed, the child sample evaluation result database 23f is registered. Then, the child sample evaluation result database 23f is associated with the child sample information database 23e via the child image-child sample intermediate table 23d.

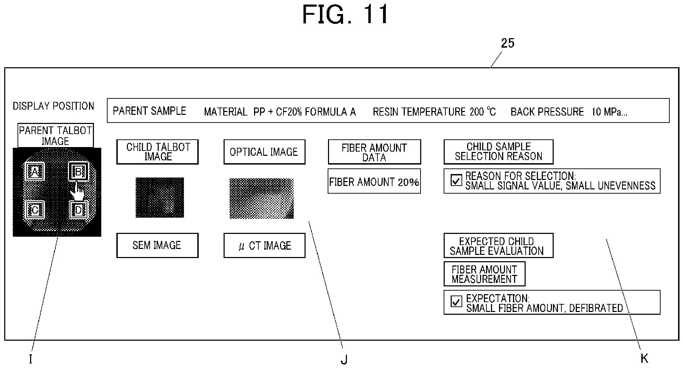

Next, the CPU 21 causes the display part 25 to display an evaluation result display screen shown in Fig. 11 (Step S9). In the present embodiment, since the position B is cut out and Talbot imaging, imaging using an optical microscope, and ash content measurement are performed thereon, the position B is selected, and a Talbot image and an optical image, fiber amount data, and the reason for selection and prediction input on the region selection screen of the child sample are displayed.

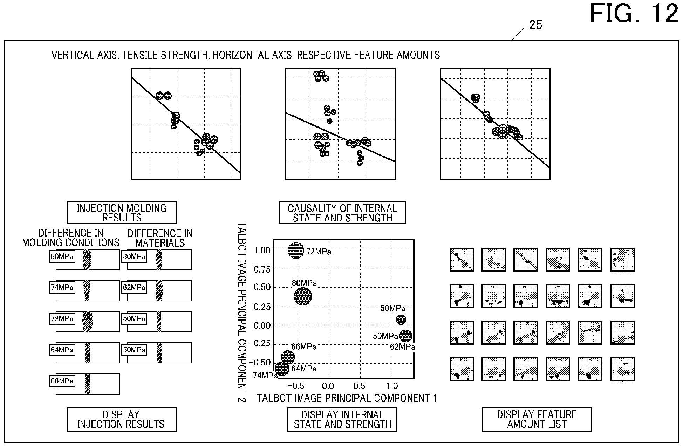

Next, the CPU 21 causes the display part 25 to display an analysis-result display screen shown in Fig. 12 (Step S10). For example, a graph in which the horizontal axis represents the feature amount (statistical amount) extracted from the Talbot image and the vertical axis represents the evaluation result of the child sample can be displayed.

This allows the feature amount and the evaluation result to be compared, making it easier to understand the meaning of the evaluation result. For example, the pixel values of the parent image (Talbot image) and the corresponding evaluation results of tensile strength can be confirmed. In addition, it is possible to visually determine which feature amount is likely to be correlated with the tensile strength.

In addition, as shown in the lower middle diagram of Fig. 12, the first component and the second component of the principal component analysis can be selected and displayed as the feature amount of the Talbot image. This is an example in which the first principal component and the second principal component are set as the vertical axis and the horizontal axis, and the result of the tensile strength associated with each sample is expressed as a bubble chart. This makes it possible to visually grasp, in addition to the simple feature amounts such as the average value and the deviation, the presence or absence of the correlation by the feature amounts extracted by the inductive method (the principal component analysis), and making it easier to understand the meaning of the evaluation result.

Furthermore, as shown in the lower left diagram of Fig. 12, regarding dumbbell pieces in which a weld is formed, nine samples under different molding conditions and material conditions are created and the results of tensile strength tests are shown. A Talbot image (an enlarged image of a weld portion) of the parent sample of each sample is drawn, and the result of the tensile strength test is associated with each sample. Accordingly, it is possible to visually grasp the relationship between the tensile strength and the state of the weld portion, and it is easy to determine what feature amount should be introduced.

### [Information Association Processing Related to Region Selection]

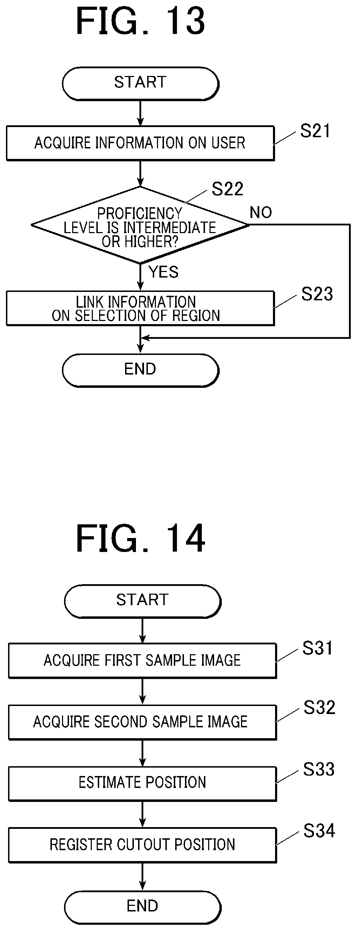

As described above, when the input of the region selection screen shown in Fig. 7 is completed, the child sample information database 23d is associated with the parent sample information database 23c via the parent sample-child sample intermediate table 23a, but it is possible to control whether or not to associate the information on the region selection with the parent sample information database 23a (information association processing on the region selection) by the information on the proficiency (proficiency information) as shown in Fig. 4. The information association processing related to selection of a region will be described with reference to Fig. 13.

First, the CPU 21 acquires, from the user information database 23g, information on a person (user) who enters data in the region selection screen shown in Fig. 7 (Step S21).

Next, the CPU 21 determines whether or not the proficiency of the inputter is, for example, intermediate or higher (Step S22). Here, whether or not the user is of an intermediate or higher level is set as a determination criterion, but the determination criterion is not limited thereto, and whether or not the user is of an advanced level or the like may be set as a determination criterion. In Step S22, if the user is of an intermediate or higher level (Step S22; YES), the processing proceeds to Step S23. In addition, in Step S22, in a case where the user is of a level lower than intermediate (Step S22; NO), the information relating to the selection of the region is not associated with the parent sample information database 23a.

Next, the CPU 21 associates information about the selection of the region with the parent sample information database 23a (Step S23). Then, the information association processing related to the selection of the region ends.

This makes it possible to confirm the selection know-how of a person having a high proficiency. Specifically, when another user opens the evaluation result display screen shown in Fig. 6 (b) or Fig. 11 to check the past test result, the child sample selection reason and the predicted child sample evaluation of the inputter with high proficiency are displayed, so that even a beginner can cut out an accurate sample by checking the know-how of the inputter with high proficiency.

### (Second Embodiment)

Although the second sample is cut out in Step S7 in the first embodiment, the input of the cut-out position is manually performed by the user. This may lead to a deviation of an input position, an input error, and a burden of input.

Therefore, automatic detection of the cut-out position is performed in the second embodiment. The cut-out position automatic detection processing will be described with reference to Fig. 14.

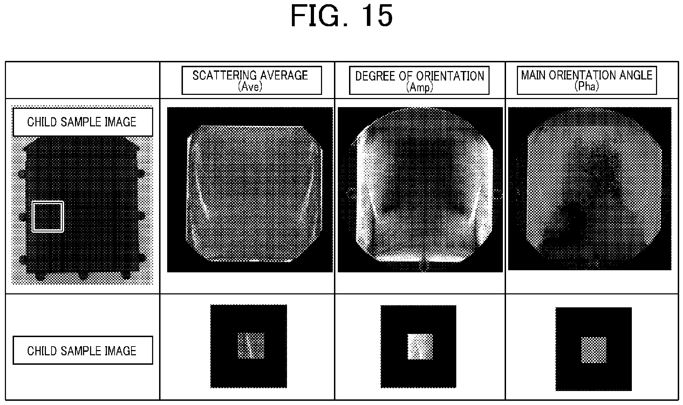

First, a parent sample (first sample) is captured by Talbot imaging using the X-ray Talbot imaging device 1. The CPU 21 of the control device 20 acquires a parent sample image as shown in the upper part of Fig. 15 (Step S21).

Next, a child sample (second sample) is physically cut out from the parent sample.

Next, the child sample is captured using the X-ray Talbot imaging device 1. The CPU 21 of the control device 20 acquires a child sample image as shown in the lower part of Fig. 15 (Step S22).

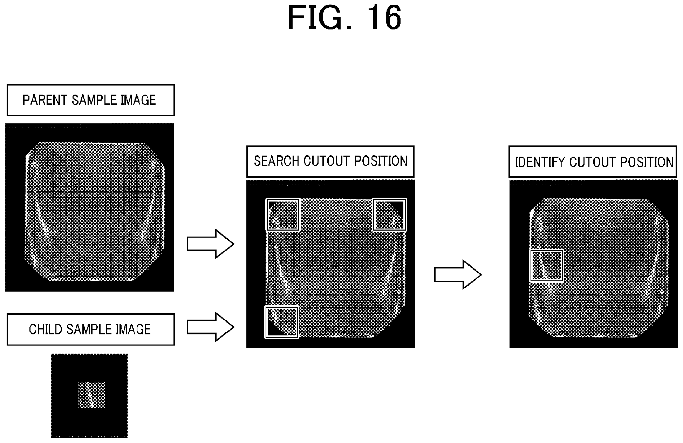

Next, as shown in Fig. 16, the CPU 21 performs pattern matching between the image of the parent sample and the image of the child sample, and estimates the position of the child sample in the parent sample (Step S23). For example, a general-purpose position search method such as OpenCV is used.

Next, the CPU 21 registers the estimated position information as a cut-out position in the child sample information database 23d (Step S24).

Thus, instead of inputting the cut-out position, the cut-out position is estimated and registered in the database after the cutting out so that it is possible to prevent the occurrence of a deviation of the input position, an input error, and a burden of input.

### (Third Embodiment)

In the first embodiment and the second embodiment, the child sample is physically cut out, but the damage caused by cutting out (processing the sample) cannot be known.

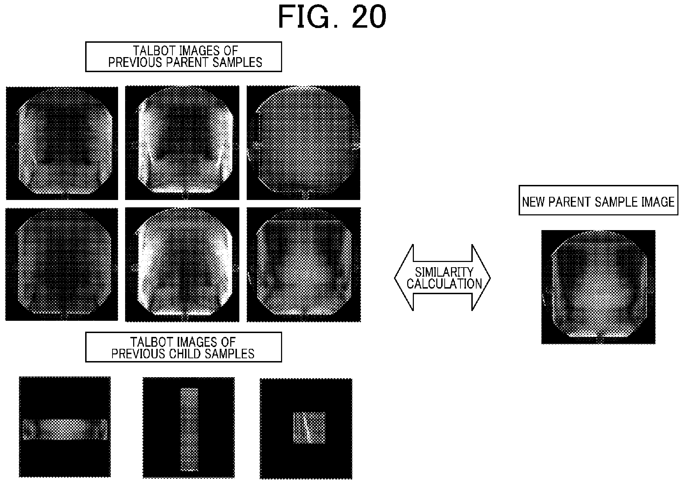

Therefore, in the third embodiment, the parent image before the child sample is cut out and the child image captured after the child sample is physically cut out are compared with each other so that the influence of the cutting out is grasped. The cutting out influence identification processing will be described with reference to Fig. 20.

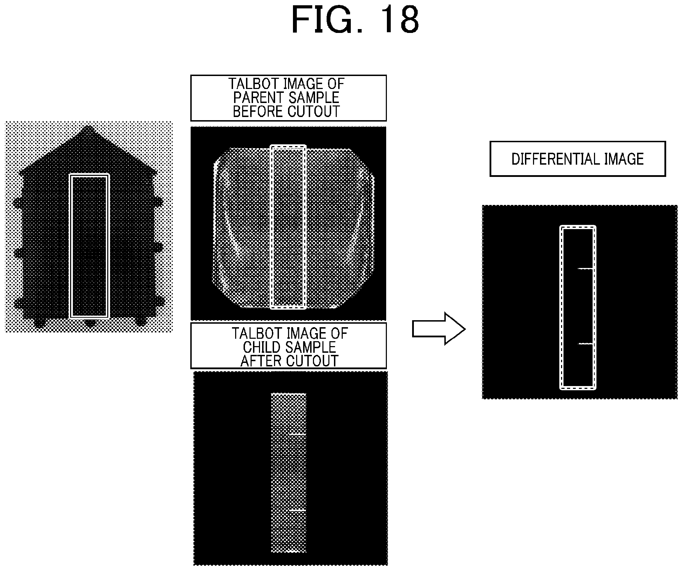

First, a parent sample (first sample) is captured by Talbot imaging using the X-ray Talbot imaging device 1. The CPU 21 of the control device 20 acquires a parent sample image as shown in the upper part of Fig. 18 (Step S31).

Next, a child sample (second sample) is physically cut out from the parent sample.

Next, the child sample is captured using the X-ray Talbot imaging device 1. The CPU 21 of the control device 20 acquires a child sample image as shown in the lower part of Fig. 18 (Step S32).

Next, the CPU 21 of the control device 20 extracts the image at the cut-out position of the image of the parent sample (in the upper frame of Fig. 18), and performs the differential processing of the image of the child sample. The CPU 21 of the control device 20 generates a differential image as shown on the right side of Fig. 18 (Step S33).

Next, the CPU 21 specifies an influenced part by the cutting out from the differential image (Step S34). To be specific, in the example of the differential image on the right side of Fig. 18, the CPU 21 specifies that there are two cracks on the right side of the child sample.

The signal values of the differential image may be subjected to arithmetic processing (such as addition as an absolute value) to obtain a quantitative change amount, which may be used as an index of damage due to processing.

### (Fourth Embodiment)

In the determination of the cut-out position, a person who has sufficient experience in cutting out rarely hesitates in the determination of the cut-out position, but a person who has little experience may hesitate in the determination of the cut-out position.

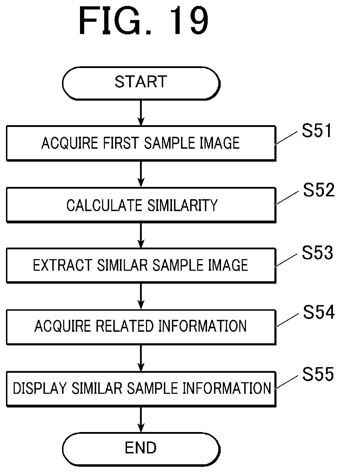

Therefore, in the fourth embodiment, when the cut-out position of the sample is determined, the past knowledge is made use of. That is, cases similar to the parent image of the target sample is searched for from the images of the parent samples captured in the past and the child images cut out from the parent images, and information such as the information of the cut-out position, the cutout reason, and the evaluation result of the child sample is presented. The similar sample information display processing will be described with reference to Fig. 19.

First, a parent sample (first sample) is captured by Talbot imaging using the X-ray Talbot imaging device 1. The CPU 21 of the control device 20 acquires a new parent sample image as shown on the right side of Fig. 20 (Step S41).

Next, the CPU 21 calculates the similarity between the new parent sample image and the previously captured parent sample image or child sample image (the image of the second sample) (Step S42).

Next, based on the calculated similarities, the CPU 21 extracts a parent sample image and a child sample image having high similarities (Step S43).

To be specific, as the CPU 21, only the one having the highest similarity may be extracted, or a plurality of (e.g., three) ones may be extracted in descending order of similarity.

Next, the CPU 21 acquires information associated with the extracted parent sample image and child sample image from the storage 23 (Step S44).

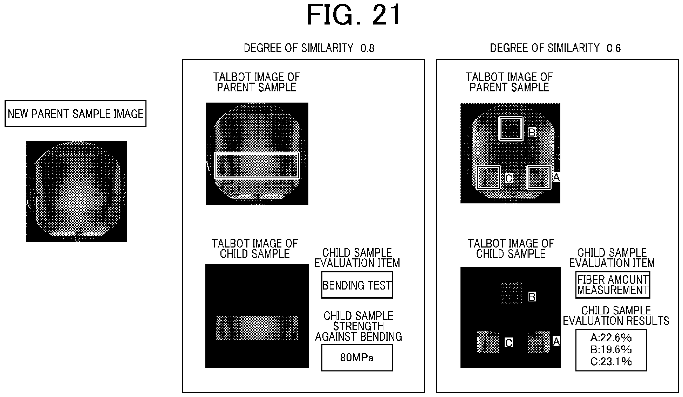

Next, as shown in Fig. 21, the CPU 21 causes the display part 25 to display information on the cut-out position regarding the parent sample having a high degree of similarity or the parent sample of the child sample having a high degree of similarity, the reason why it is cut out, the result of evaluation performed on the child sample, and the like (Step S45).

Specific examples of the method of calculating the similarity include a method of using a histogram (using the histogram similarity function of OpenCv), a method of using template matching, and a method of combining the AKAZE feature amount and the k-nearest neighbor algorithm (kNN).

In addition, as image processing before the calculation of the degree of similarity, it is desirable to perform zero filling processing on the background. Specifically, contour extraction is performed, and the signal outside the contour of the sample is filled with 0.

In addition, since the small-angle scattering image and the orientation image have signal value dependency due to the thickness, when subjects having different thicknesses are compared, the levels of the absolute values do not match, and the degree of similarity decreases. When it is desired to reduce the influence of the difference in the thickness of the subjects for comparison, it is desirable to use (a) an image obtained by dividing a small-angle scattering image by an absorption image, (b) an eccentricity Ecc image, and (c) an image obtained by dividing an Amp image by an Ave image.

Note that the Amp image refers to an image indicating an amplification value (signal value amp) for each pixel, and the Ave image refers to an image indicating an average value (signal value ave) for each pixel (Japanese Unexamined Patent Publication No. 2021-089195). The eccentricity Ecc image refers to an image indicating the eccentricity ecc for each pixel. When σ1 = ave + amp (corresponding to the maximum value of the small-angle signal value) and σ2 = ave - amp (corresponding to the minimum value of the small-angle signal value) are calculated using the signal values amp and ave obtained from the orientation image, the eccentricity ecc is calculated using the following expression.

### [Expression 1]

### (Effect)

As described hereinbefore, the image management system (control device 20) includes the first storage section (storage 23) storing the first image of the first sample related to quality information, the second storage section (storage 23) storing the evaluation result of the second sample cut from the first sample, and the third storage section (storage 23) storing information on the cut-out position of the first sample or the second sample and the feature amount at the position selected from the first image. The first image, the evaluation result of the second sample, the information on the cut-out position, and the feature amount are associated with each other. This makes it possible to more suitably manage the evaluation results of the parent sample and the child sample in an association with each other.

The image management system (control device 20) includes the controller (CPU 21), and the controller causes the first storage section (storage 23) to store the first image of the first sample, causes the second storage section (storage 23) to store the evaluation result of the second sample cut out from the first sample, and causes the third storage section (storage 23) to store information of the cut-out position of the first sample or the second sample and the feature amount at the position selected from the first image. The first image, the evaluation result of the second sample, the information of the cut-out position, and the feature amount are associated with each other. This makes it possible to more suitably associate and manage the evaluation results of the parent sample and the child sample.

Since the evaluation method for the quality information on the first image is different from the evaluation method for the second sample, the evaluation result can be managed without limitation of the evaluation method.

Since the first image is a Talbot image, it is possible to acquire information such as unevenness, defects, and voids of the fibers, and it is possible to determine anisotropy of orientation, which is the quality of the cut-out sample, and the presence or absence of voids from the image.

The second image obtained by imaging the second sample is obtained by the same imaging method as the first image, and the controller (CPU 21) specifies the cut-out position of the second sample by analyzing the first image and the second image. Therefore, when the sample is cut out, it is possible to prevent the user from being unsure about from which sample the sample is cut out and from which direction the sample is cut out, and to prevent a deviation of an input position, an input error, and a burden of input, which may be led by the user manually inputting the cut-out position.

The same imaging method as that used for the first image second image is used for the second image obtained by imaging the second sample, and the controller (CPU 21) compares the image at the position selected from the first image with the second image to specify a change before and after cutting out the second sample. Therefore, it is possible to check damage caused by processing the sample.

Further, since the controller (CPU 21) associates the reason information regarding the reason why the second sample is cut out with the cut-out position information of the second sample in the first sample, it is possible to utilize the past knowledge when determining the cut-out position of the sample.

In addition, since the controller (CPU 21) acquires an image similar to the first sample from the first storage section (storage 23) and the second storage section (storage 23), acquires information associated with the acquired image from the third storage section (storage 23), and displays the acquired information on the display part (display part 25), it is possible to utilize past knowledge when determining the cut-out position of the sample.

As described hereinbefore, the image management device (control device 20) includes the first storage section (storage 23) storing the first image of the first sample related to quality information, the second storage section (storage 23) storing the evaluation result of the second sample cut from the first sample, and the third storage section (storage 23) storing information on the cut-out position of the first sample or the second sample and the feature amount at the position selected from the first image. The first image, the evaluation result of the second sample, the information on the cut-out position, and the feature amount are associated with each other. This makes it possible to more suitably manage the evaluation results of the parent sample and the child sample in an association with each other.

The image management method includes the steps of: storing the first image of the first sample related to quality information; storing the evaluation result of the second sample cut out from the first sample; storing information of the cut-out position of the first sample or the second sample and the feature amount at the position selected from the first image; and associating the first image, the evaluation result of the second sample, the information of the cut-out position, and the feature amount with each other. This makes it possible to more suitably manage the evaluation results of the parent sample and the child sample in an association with each other.

The program causes the computer of the image management device (control device 20) to function as the controller (CPU 21) that causes the first storage section (storage 23) to store the first image of the first sample related to the quality information, causes the second storage section (storage 23) to store the evaluation result of the second sample cut out from the first sample, causes the third storage section (storage 23) to store information of the cut-out position of the first sample or the second sample and the feature amount at the position selected from the first image, and associates the first image, the evaluation result of the second sample, the information of the cut-out position, and the feature amount with each other. This makes it possible to more suitably associate and manage the evaluation results of the parent sample and the child sample.

Although the embodiments of the present invention have been described above, the above-described present embodiments are preferred examples according to the present invention and do not limit the present invention.

For example, the first to fourth embodiments may be combined as appropriate.

Furthermore, although the first image is a Talbot image in the above description, it is not limited thereto. For example, an image captured using an optical microscope may be used, or an inspection device capable of visually displaying a crack or the like may be used.

The position (coordinates) of the cut-out region may be based on a certain point of the first sample or a certain point of the second sample.

Furthermore, in the fourth embodiment, as shown in Fig. 21, the CPU 21 causes the display part 25 to display information on the cut-out position and the cut-out reason for a parent sample having a high degree of similarity or a parent sample of a child sample having a high degree of similarity, a result of evaluation performed on the child sample, and the like, and the user cuts out the child sample on the basis of the information, but the cut-out position may be automatically set in the cutout device without causing the display part 25 to display the information.

Although a hard disk, a semiconductor nonvolatile memory, or the like is used in the above description as a computer-readable medium storing the program according to the present invention, the present invention is not limited to this example. Other applicable computer-readable media include portable recording media such as CD-ROM.

In addition, the detailed configuration and the detailed operation of each device can be appropriately changed without departing from the spirit and scope of the present invention.

### Reference Signs List

1 X-RAY TALBOT IMAGING DEVICE
11 X-RAY GENERATOR
19 CONTROLLER DEVICE
2 IMAGE PROCESSING DEVICE
20 CONTROL DEVICE
21 CPU (CONTROLLER)
22 RAM
23 STORAGE
23A PARENT SAMPLE INFORMATION DATABASE
23B PARENT IMAGE DATABASE
23C PARENT SAMPLE - CHILD SAMPLE INTERMEDIATE TABLE
23D CHILD SAMPLE INFORMATION DATABASE
23E CHILD IMAGE - CHILD SAMPLE INTERMEDIATE TABLE
23F CHILD SAMPLE EVALUATION RESULT DATABASE
23G USER INFORMATION DATABASE
24 INPUT SECTION (INFORMATION INPUT SECTION)
25 DISPLAY PART
26 COMMUNICATION SECTION
H SUBJECT (INSPECTION TARGET)

## Claims

1. An image management system comprising:
a first storage section that stores a first image of a first sample related to quality information;
a second storage section that stores an evaluation result of a second sample cut out from the first sample; and
a third storage section that stores information on a cut-out position of the first sample or the second sample and a feature amount at a position selected from the first image,
wherein the first image, the evaluation result of the second sample, the information on the cut-out position, and the feature amount are associated with each other.

2. The image management system according to claim 1, further comprising:
a controller,
wherein the controller:
stores the first image of the first sample in the first storage section;
stores the evaluation result of the second sample cut out from the first sample in the second storage section;
stores the information on the cut-out position of the first sample or the second sample, and the feature amount at the position selected from the first image in the third storage section; and
associates the first image, the evaluation result of the second sample, the information on the cut-out position, and the feature amount with each other.

3. The image management system according to claim 1,
wherein the quality information includes orientation information of fibers in the first sample.

4. The image management system according to claim 1 or 2,
wherein an evaluation method for the quality information of the first image and an evaluation method for the second sample are different from each other.

5. The image management system according to claim 1 or 2,
wherein the first image is a Talbot image.

6. The image management system according to claim 2,
wherein a second image is obtained by imaging the second sample using a same imaging method as used to obtain the first image,
wherein the controller specifies the cut-out position of the second sample by analyzing the first image and the second image.

7. The image management system according to claim 2,
wherein a second image is obtained by imaging the second sample using a same imaging method as used to obtain the first image,
wherein the controller compares the first image at the selected position and the second image to specify a change before and after cutting out the second sample.

8. The image management system according to claim 2,
wherein the controller associates reason information of a reason for cutting out the second sample with information on the cut-out position of the second sample in the first sample.

9. The image management system according to claim 8,
wherein the controller acquires an image similar to the first sample from the first storage section and the second storage section, acquires information associated with the acquired image from the third storage section, and causes a display part to display the acquired information.

10. An image management device comprising:
a first storage section that stores a first image of a first sample related to quality information;
a second storage section that stores an evaluation result of a second sample cut out from the first sample; and
a third storage section that stores information on a cut-out position of the first sample or the second sample and a feature amount at a position selected from the first image,
wherein the first image, the evaluation result of the second sample, the information on the cut-out position, and the feature amount are associated with each other.

11. An image management method comprising:
a step of storing a first image of a first sample related to quality information;
a step of storing an evaluation result of a second sample cut out from the first sample;
a step of storing information on a cut-out position of the first sample or the second sample and a feature amount at a position selected from the first image; and
a step of associating the first image, the evaluation result of the second sample, the information on the cut-out position, and the feature amount with each other.

12. An image management program that causes a computer of an image management device to function as a controller that:
stores a first image of a first sample related to quality information;
stores an evaluation result of a second sample cut out from the first sample;
stores information on a cut-out position of the first sample or the second sample and a feature amount at a position selected from the first image; and
associates the first image, the evaluation result of the second sample, the information on the cut-out position, and the feature amount with each other.
